# EUROPEAN PATENT SPECIFICATION

(11) **EP 2 667 632 B1**
(45) Date of publication and mention of the grant of the patent: **18.10.2023**
(21) Application number: 12008618.6
(22) Date of filing: 27.12.2012
(51) Int. Cl.: H04Q 11/00

(54) **Method and apparatus for extending multipoint control protocols to mixed media access systems**
Verfahren und Vorrichtung zur Erweiterung von Mehrpunkt-Steuerungsprotokollen auf gemischte Medienzugriffssysteme
Procédé et appareil d'extension de protocoles de commande multipoint à des systèmes d'accès à supports mixtes

(30) Priority: 25.05.2012 US 201261651726 P; 13.06.2012 US 201213495042
(43) Date of publication of application: 27.11.2013
(73) Proprietor: Avago Technologies International Sales Pte. Limited, Singapore 768923 (SG)
(72) Inventor: Lamb, Lowell, San Ramon, CA 94583 (US); Kramer, Glen, Petaluma, CA 94954 (US); Hirth, Ryan, Windsor, CA 95492 (US); Boyd, Edward, Petaluma, CA 94954 (US)
(74) Representative: Bosch Jehle Patentanwaltsgesellschaft mbH

(56) References cited:
- US-A1- 2004 028 409
- US-A1- 2011 058 813
- US-A1- 2012 033 972
- BISWANATH MUKHERJEE: "EPoC (Ethernet PON over Coax): Architecture, MPCP, and DBA", IEEE 802 PLENARY SESSION; MARCH 11-16, 2012; HILTON WAIKOLOA VILLAGE ON THE BIG ISLAND OF HAWAII, USA, IEEE802.ORG , 11 March 2012 (2012-03-11), pages 1-21, XP002712260, Retrieved from the Internet: URL:http://www.ieee802.org/3/epoc/public/m ar12/mukherjee_01_0312.pdf [retrieved on 2013-09-04]
- N. VARANESE ET AL: "EPoC Architecture Considerations; IEEE 802.3 Interim Session ; varanese_01a_0512", IEEE DRAFT; VARANESE_01A_0512, IEEE-SA, PISCATAWAY, NJ USA, vol. 802.3.epoc, 15 May 2012 (2012-05-15), pages 1-13, XP068021304, [retrieved on 2012-05-15]
- GENERAL ETHERNET / EPON OVER COAX EUGENE DAI COX COMMUNICATIONS: "General Ethernet / EPON over Coax - EPoC Basic Assumptions and Reference Model ; dai_01_0312", IEEE DRAFT; DAI_01_0312, IEEE-SA, PISCATAWAY, NJ USA, vol. 802.3.epoc, 4 May 2012 (2012-05-04), pages 1-12, XP068021220, [retrieved on 2012-05-04]

## Description

### BACKGROUND

### Field of the Invention

The present invention relates generally to multipoint control protocols and, more particularly, to a method and apparatus for extending multipoint control protocols to mixed media access systems.

### Introduction

In a point-to-multipoint system such as an Ethernet passive optical network (EPON), a single optical line terminal (OLT) at a head end can be designed to communicate with a plurality of optical network units (ONUs) at various end nodes. This arrangement leverages a shared fiber optic plant by multiple networking nodes. Typically, the OLT broadcasts its transmissions in the downstream direction to all the ONUs. Each of the ONUs, on the other hand, transmit in the upstream direction to the OLT in a pre-assigned time slot.

US 2012/033972 A1 describes an apparatus comprising a time domain multiplexing (TDM) to Orthogonal Frequency Division Multiplexing (OFDM) or bounded Quadrature Amplitude Modulation (QAM) channels HOT PON converter configured to couple to an optical line terminal (OLT) via an optical fiber and to a plurality of network terminals (NTs) via a point-to-multipoint coaxial cable and configured to transmit TDM data from the OLT using OFDM or bounded QAM channels to the corresponding NTs, wherein the OFDM or bounded QAM channels transmission of TDM data maintains End-to-End (E2E) TDM passive optical network (PON) protocols, service provisioning, and quality of service (QoS).

Biswanath Mukherjee: "EPoC (Ethernet PON over Coax): Architecture, MPCP, and DBA", IEEE 802 Plenary Session; March 11-16, Hilton Waikoloa Village on the Big Island of Hawaii, USA, IEEE802.org, March 11, 2012, pages 1-21 describes an Ethernet passive optical network (PON) over Coax (EPoC) architecture.

N. Varanese et al.: "EPoC Archtecture Considerations; IEEE 802.3 Interim Session; IEEE draft; IEEE-SA, Piscataway, NJ USA, vol. 802.3.epoc, May 15, 2012, pages 1-13 describes different EPoC protocol architectures.

Eugene Dai et al.: "General Ethernet / EPON over Coax - EpoC Basic Assumptions and Reference Model; IEEE draft; IEEE-SA, Piscataway, NJ USA, vol. 802.3.epoc, May 4, 2012, pages 1-12 describes and illustrates basic assumptions of EPOC.

US 2011/058813 A1 describes a media converter comprising a first interface configured to receive a first optical signal sent from an optical line terminal (OLT) and generate a first bitstream having a first physical layer (PHY) encoding; a PHY conversion module, coupled to the first interface, configured to perform PHY layer conversion of the first bitstream to generate a second bitstream having a second PHY encoding; and a second interface, coupled to the PHY conversion module, configured to generate a first radio frequency (RF) signal from the second bitstream and to transmit the first RF signal to a coaxial network unit (CNU).

### BRIEF SUMMARY OF THE INVENTION

According to the invention there are provided network devices as defined by independent claims 1 and 12 and a method performed by a network device as defined by independent claim 15.

Further advantageous features of the invention are defined by the dependent claims.

According to an aspect, a network device comprises:
a first physical layer device that is configured to receive first network traffic from an optical line terminal at a first transmission rate via a fiber optic media;
a second physical layer device that is configured to transmit second network traffic to an end station at a second transmission rate, wherein said second network traffic is based on said first network traffic; and
a medium-to-medium adaptor that is configured to extract a resource apportionment identifier from a header portion of a frame structure contained in said first network traffic and to include said resource apportionment identifier in an Ethernet frame contained in said second network traffic, wherein said resource apportionment identifier is assigned to said end station by said optical line terminal and enables said end station to report a status to said optical line terminal and to grant bandwidth by said optical line terminal to said end station.

According to an aspect, a network device comprises:
a physical layer device that is configured to receive network traffic from a medium-to-medium adaptor; and
a media access control module that is configured to extract a resource apportionment identifier contained inside an Ethernet frame in said first network traffic, wherein said resource apportionment identifier is assigned to said network device by an optical line terminal that is coupled to said medium-to-medium adaptor, said resource apportionment identifier enabling said network device to report a status to said optical line terminal and to grant bandwidth by the optical line terminal to said network device.

According to an aspect, a method is provided performed by a network device, comprising:
receiving, via a first physical layer device in the network device, first network traffic at a first transmission rate, said first physical layer device being coupled to an optical line terminal via fiber optic media;
extracting a resource apportionment identifier from a header portion of a frame structure contained in said first network traffic, said resource apportionment identifier being assigned to said end station by said optical line terminal and enables said end station to report a status to said optical line terminal and to grant bandwidth by said optical line terminal to said end station;
inserting said extracted resource apportionment identifier into an Ethernet frame; and
transmitting, via a second physical layer device in the network device, second network traffic that includes said Ethernet frame to said end station at a second transmission rate.

Advantageously, said transmitting comprises transmitting via one of a coaxial cable, copper twisted pair, wireless communication and a second fiber optic media.

Advantageously, said resource apportionment identifier is a Logical Link Identifier (LLID).

Advantageously, said resource apportionment identifier is an Allocation Identifier (AllocID).

Advantageously, said inserting comprises inserting said resource apportionment identifier into a VLAN tag field in said Ethernet frame.

Advantageously, said first transmission rate is different from said second transmission rate.

Advantageously, the method further comprises performing a rate conversion between said first transmission rate and said second transmission rate.

Advantageously, the method further comprises decrypting said received first network traffic and encrypting said second network traffic.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered limiting of its scope, the invention will be described and explained with additional specificity and detail through the use of the accompanying drawings in which:
FIG. 1 illustrates an example of a point-to-multipoint communication network.
FIG. 2 illustrates an example of extending multipoint control protocols to a mixed media access system.
FIG. 3 illustrates another example of extending multipoint control protocols to a mixed media access system.
FIG. 4 illustrates an embodiment of an adaptor node in a mixed media access system.
FIG. 5 illustrates examples of processing by a medium-to-medium adaptor.
FIG. 6 illustrates an example of communication of a resource apportionment identifier over a mixed media access system.
FIG. 7 illustrates an example of mapping a resource apportionment identifier at an intermediate adaptor node.
FIG. 8 illustrates an example of a process of the present invention.
FIG. 9 illustrates an example of extending multipoint control protocols to a WiFi network.
FIG. 10 illustrates an example of a second process of the present invention.

### DETAILED DESCRIPTION

Various embodiments of the invention are discussed in detail below. While specific implementations are discussed, it should be understood that this is done for illustration purposes only. A person skilled in the relevant art will recognize that other components and configurations may be used without parting from the scope of the invention.

In various contexts where the high cost of optical fiber installation may not justify the extension of the optical fiber to the end network unit, mixed media access systems can result. For example, mixed media access systems such as PON-fed DSL and PON-fed Ethernet in telecom networks, Ethernet PON over coax (EPoC) in cable multiple systems operator (MSO) networks, PON-fed WiFi, WiMAX, 3G, LTE, etc. in wireless networks, and PON-fed power-line networks can be used. In these mixed media access systems; multiple management and quality of service (QoS) domains would exist.

In addressing mismatches at the domain boundaries, a medium-to-medium adaptor is provided that interfaces with an upstream OLT in a PON domain and a downstream device in a non-PON domain. The medium-to-medium adaptor enables an implementation of end-to-end services across multiple QoS domains by passing all traffic with controlled delay and without contention. In one embodiment, the medium-to-medium adaptor is configured to map a resource apportionment identifier in a header portion of the frame structure (e.g., preamble of an Ethernet frame or header of a GPON encapsulation method (GEM) or xGPON encapsulation (xGEM) frame) contained in network traffic communicated with an upstream OLT in a PON domain with a resource apportionment identifier in an Ethernet frame contained in network traffic communicated with a downstream device in a non-PON domain. The resource apportionment identifier is assigned to an end network unit by the OLT and enables the end network unit to report a status to the OLT and to grant bandwidth by the OLT to the end network unit. The communication of the resource apportionment identifier end-to-end across the PON domain and non-PON domain enables a control of the end-to-end QoS in the mixed media access system. As an example, in a mixed media access system that includes multiple medium-to-medium adaptors that each interface with an OLT in a PON domain and that support a non-PON wireless network domain (e.g., WiFi), control of the end-to-end QoS of a mobile station can be maintained even as the mobile station roams among the coverage areas of the multiple medium-to-medium adaptors.

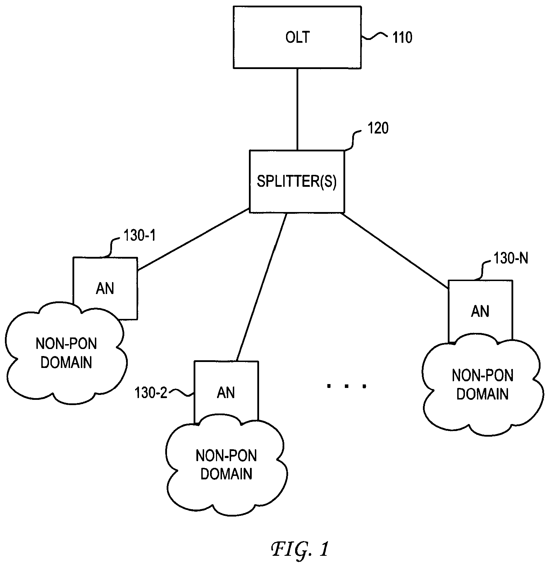

FIG. 1 illustrates an example of a point-to-multipoint communication network that interfaces a PON domain with a non-PON domain. As illustrated, the point-to-multipoint network includes a single OLT 110 that communicates with a plurality of adaptor nodes 130-n via a PON. The illustrated PON includes splitter(s) 120, which enable a single feeder cable to be split into multiple drop cables for the individual adaptor nodes 130-n. Each adaptor node 130-n can interface with a non-PON domain such as that supported by further coaxial cable, copper twisted pair, fiber optic media, wireless, etc. network links.

Here, it should be noted that the PON domain can represent an EPON such as that defined by IEEE 802.3, GPON, BPON, xGPON, or NGPON defined by ITU-T, or the like. In general, the advantage of the PON is that it allows sharing of the fiber optic plant by multiple network nodes. In the downstream direction, OLT 110 is configured to broadcast frames containing packets to the end network units that are responsible for extracting the particular packets that are destined for that location, while in the upstream direction the end network units are designed to transmit in a way to avoid collisions between the packets using, for example, a time division multiple access (TDMA) communication protocol.

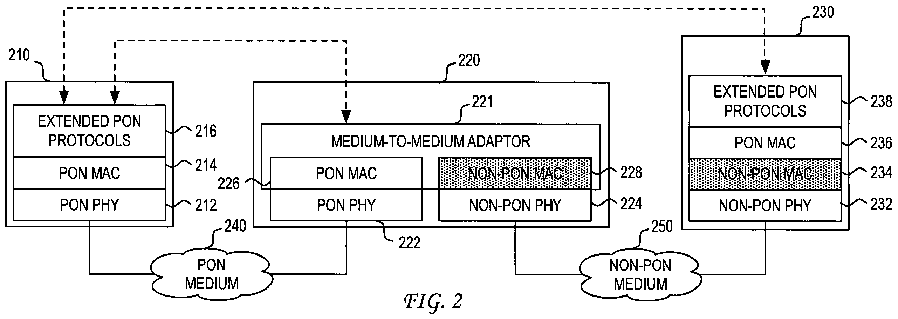

In a mixed media access system, adaptor node 130-n is configured to interface with a PON domain and a non-PON domain. FIG. 2 illustrates an example use of an adaptor node that can be configured to extend a multipoint control protocol to a mixed media access system. As illustrated, OLT 210 communicates with end network unit 230 via adaptor node 220. Communication between OLT 210 and adaptor node 220 is facilitated by PON medium 240. Communication between adaptor node 220 and end network unit 230 is facilitated by non-PON medium 250 that can include, for example, coaxial cable, copper twisted pair, fiber optic media, wireless, etc. network links.

In providing an interface between a PON domain and a non-PON domain, adaptor node 220 is configured to include medium-to-medium adaptor 221. As illustrated, adaptor node 220 includes PON physical layer device (PHY) 222 and PON media access control (MAC) 226 that are configured to operate with PON PHY 212 and PON MAC 214, respectively, in OLT 210. Adaptor node 220 also includes non-PON PHY 224 and non-PON MAC 228 that are configured to operate with non-PON PHY 232 and non-PON MAC 234, respectively, in end network unit 230. Here, it should be noted that non-PON MAC 228 in medium-to-medium adaptor 221 is optionally included depending on whether or not communication in the non-PON domain uses a non-PON MAC to facilitate controls such as addressing and non-PON channel access. For example, where the non-PON domain includes a WiFi link, medium-to-medium adaptor 221 can be configured to include a complementary 802.11 MAC to operate with an 802.11 MAC in end network unit 230. As would be appreciated, the necessity and/or particular type of non-PON MAC used in the non-PON domain would be implementation dependent.

As further illustrated in FIG. 2, end network unit 230 also includes PON MAC 236 that resides on top of the optional non-PON MAC 234. Residing on top of PON MAC 236 in end network unit 230 is extended PON protocols 238. In one example applied to IEEE 802.3 EPON, the extended PON protocols includes a lower layer Multi-Point Control Protocol (MPCP) and a higher layer Operation, Administration and Maintenance (OAM). In another example applied to ITU-T GPON, the extended PON protocols includes a lower layer Physical Layer Operations and Maintenance (PLOAM) and a higher layer Operation Management Control Interface (OMCI).

Extended PON protocols 238 in end network unit 230 is designed to cooperate with extended PON protocols 216 in OLT 210 in providing end-to-end services across multiple management and QoS domains. As illustrated in FIG. 2, medium-to-medium adaptor 221 is also designed to cooperate with extended PON protocols 216 in OLT 210. In general, extended PON protocols 216 can be designed to control the behavior of end network unit 230 and to configure intermediate adaptor node 220 to pass any and all traffic with controlled delay and without contention. More specifically, extended PON protocols 210 can be designed to control the behavior of end network unit 230 and to configure intermediate adaptor node 220 to schedule transmission windows to avoid collisions or contention.

The operation of adaptor node 220 in facilitating the provision of end-to-end services is described in greater detail below. Here, it should be noted that PON MAC 236 and extended PON protocols 238 in end network unit 230 would be unaware of the particular non-PON medium on which it operates.

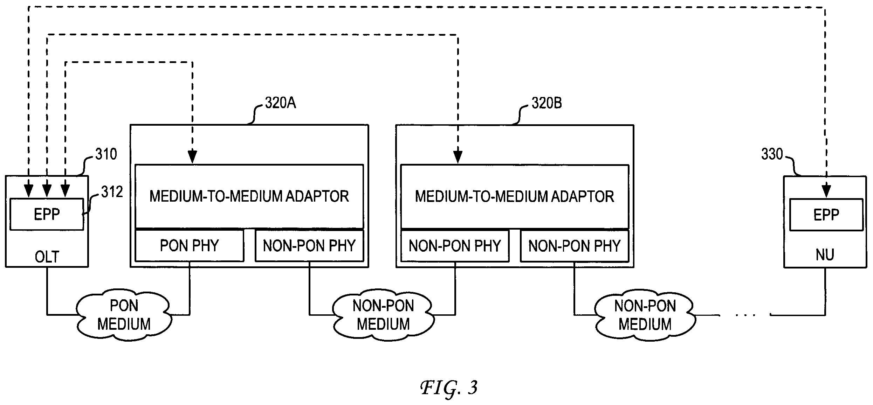

Prior to describing the operation of adaptor node 220 in greater detail, it should be noted that the principles of the present invention are not confined to an end-to-end link having a single intermediate adaptor node. As illustrated in FIG. 3, a multipoint control protocol can be extended to a mixed media access system that includes a plurality of intermediate adaptor nodes. As illustrated, OLT 310 is coupled to end network unit 330 via multiple intermediate adaptor nodes 320A, 320B, etc. In various implementations, intermediate adaptor nodes 320A, 320B, etc. can be used to facilitate an end-to-end service across a plurality of non-PON domains in addition to a PON domain between OLT 310 and adaptor node 320A. As would be appreciated, each non-PON domain can represent an independently operated domain that utilizes a different non-PON medium. As illustrated, extended PON protocols 312 in OLT 310 can be designed to control the behavior of end network unit 330 and to configure intermediate adaptor nodes 320A, 320B, etc. to pass any and all traffic with controlled delay and without contention.

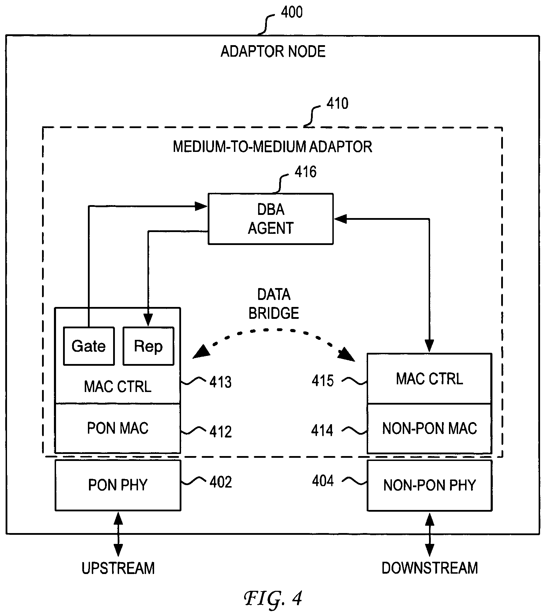

FIG. 4 illustrates an embodiment of an intermediate adaptor node that can facilitate end-to-end services across multiple management and QoS domains. In the illustrated example, adaptor node 400 includes PON PHY 402 that interfaces with an upstream OLT and non-PON PHY 404 that interfaces with a downstream device (e.g., end network unit or other intermediate adaptor node). Where the adaptor node interfaces with an upstream adaptor node, then the adaptor node can include a non-PON PHY.

Adaptor node 400 also includes medium-to-medium adaptor 410. In general, medium-to-medium adaptor 410 is designed to extend a multi-point control protocol over the non-PON domain and provides a data bridge between upstream and downstream domains. In the example embodiment illustrated in FIG. 4, medium-to-medium adaptor 410 includes PON MAC 412 and MAC Control 413 that reside above PON PHY 402. Medium-to-medium adaptor 410 also includes non-PON MAC 414 and MAC Control 415 that reside above non-PON PHY 404. This example embodiment can be used to facilitate communication with an upstream PON domain and a downstream non-PON domain. Where the intermediate adaptor node facilitates communication with an upstream non-PON domain, then the medium-to-medium adaptor can also include a non-PON MAC that resides below the PON MAC.

As further illustrated in FIG. 4, medium-to-medium adaptor 410 also may include a dynamic bandwidth allocation (DBA) agent 416. In general, DBA agent 416 facilitates a bandwidth assignment mechanism that relies on downstream bandwidth assignment messages and upstream status report messages that are handled by the bandwidth assignment and reporting processes within MAC Control 413. In general, the bandwidth assignment messages can be used to assign a transmission timeslot to the network unit, while the status report messages can be used to report conditions back to the OLT. These reports can assist the OLT in making intelligent allocation decisions. In one embodiment, adaptor node 400 can be designed to include per-service statistics counters, alarm triggers, and threshold-crossing alerts that enable unified alarm surveillance and performance monitoring.

In one example applied to IEEE 802.3 EPON, the bandwidth assignment message is represented by the EPON GATE message that identifies a timeslot based on a start time and length, while the status report message is represented by the EPON REPORT message. In another example applied to ITU-T GPON, the bandwidth assignment message is enabled using the US BW Map in the header of the GEM/XGEM frame, which identifies a timeslot based on a start time and an end time, while the status report message is enabled through the request for an upstream transmission slot using either the upstream Ind field in the PLOu block or the DBRu field.

In ensuring that intermediate adaptor node 400 passes traffic in scheduled transmission windows to avoid collisions or contention within the network, the bandwidth assignment process within MAC control 413 can control the upstream transmission of data that resides in a transmission queue, which holds traffic received from a downstream device in a non-PON domain. As would be appreciated, the transmission queue can also include message traffic (e.g., REPORT messages) that is generated by intermediate adaptor node 400 and is to be delivered upstream to the OLT.

To facilitate the transmission of data in scheduled transmission windows, the intermediate adaptor node is designed to pass traffic with controlled delays. For example, during the autodiscovery phase during which time the OLT detects newly connected end network units and learns the round-trip delays of those end network units, the intermediate adaptor node can be configured to pass messages after a delay of a consistent period of time. This consistent period of time can be defined to be a delay period that would be sufficient to accommodate processing by the adaptor node.

Through an introduction of a controlled delay period by the intermediate adaptor node, the OLT can accurately determine the round-trip delay between the OLT and the end network unit. Such accuracy is an important factor in enabling the OLT in scheduling bandwidth assignments to the various end network units. For example, if the DBA agent in the OLT desires to receive data from an end network unit at time t, then the bandwidth assignment message would be sent to the end network unit exactly at time t - RTT, where RTT is the round-trip time to the end network unit (including any controlled delays introduced by the intermediate adaptor node(s)).

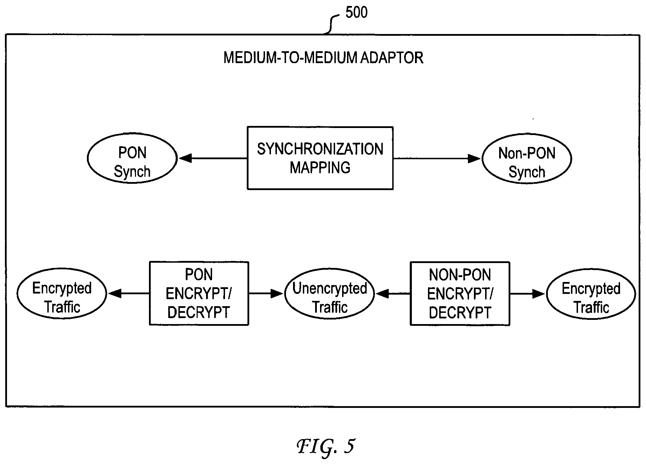

FIG. 5 illustrates further examples of processing by a medium-to-medium adaptor. As illustrated, medium-to-medium adaptor 500 can include a synchronization mapping module. This synchronization mapping module can be configured to address the differences in synchronization within the PON domain as compared to synchronization within the non-PON domain. In various examples, synchronization mapping module can be configured to address differences in transmission rates, clocking, media access, etc. that are used in the PON domain and the non-PON domain.

In one application, synchronization mapping module can be used to facilitate a full-duplex/half-duplex adaptation where the PON domain operates in a full duplex mode and the non-PON domain operates in a half duplex mode. Here, the OLT, adaptor node and end network unit can provide unified management of the upstream and downstream traffic. More specifically, the extended PON protocol can be used to schedule upstream transmission by the end network unit and downstream transmission by the medium-to-medium adaptor to coincide with the time-slots in the non-PON domain.

Another example of processing by medium-to-medium adaptor 500 is the encryption adaptation where a first form of encryption is used in the PON domain and a second form of encryption is used in the non-PON domain. In providing an interface between the PON domain and the non-PON domain, medium-to-medium adaptor 500 can decrypt PON traffic to produce unencrypted traffic that is processed by the medium-to-medium adaptor, prior to encrypting traffic to be sent over the non-PON domain. In one embodiment, the traffic encrypted for the non-PON domain has previously been encrypted using PON encryption. As would be appreciated, medium-to-medium adaptor can be configured to address mismatches between capacity, latency, bit error rate (BER), forward error correction (FEC), security, etc. between the PON domain and non-PON domain boundaries.

As has been described, a medium-to-medium adaptor contained in an intermediate adaptor node can be configured to perform various adaptations in providing an interface between a PON domain and a non-PON domain. As would be appreciated, the specific types of adaptations would be dependent on the particular implementation of the non-PON domain. Notwithstanding these various potential adaptations, the medium-to-medium adaptor is designed to implement end-to-end services across multiple management and QoS domains. To facilitate this implementation of end-to-end services across multiple management and QoS domains, a resource apportionment identifier (e.g., LLID or AllocID) that is assigned by an OLT to an end network unit is communicated end-to-end across the PON domain and non-PON domain.

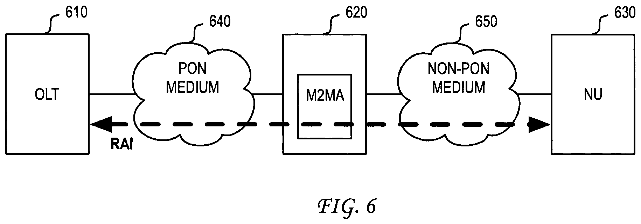

FIG. 6 illustrates an example of communication of a resource apportionment identifier over a mixed media access system. As illustrated, the mixed media access system includes a PON domain that facilitates communication between OLT 610 and intermediate adaptor node 620 over PON medium 640 and a non-PON domain that facilitates communication between intermediate adaptor node 620 and end network unit 630 over non-PON medium 650. As noted above, the resource apportionment identifier is assigned to end network unit 630 by OLT 610 and enables end network unit 630 to report a status to OLT 610 and to grant bandwidth by OLT 610 to end network unit 630. As illustrated, the assigned resource apportionment identifier is carried end-to-end over the PON domain and the non-PON domain.

In one embodiment, the medium-to-medium adaptor can be configured to map a resource apportionment identifier in a header portion of the frame structure contained in network traffic communicated with OLT 610 in a PON domain to a resource apportionment identifier in an Ethernet frame contained in network traffic communicated with end network unit 630 in a non-PON domain. This process of mapping of the resource apportionment identifier is designed to enable the end-to-end communication of the resource apportion identifier between the OLT and the end network unit, thereby enabling end-to-end service implementation.

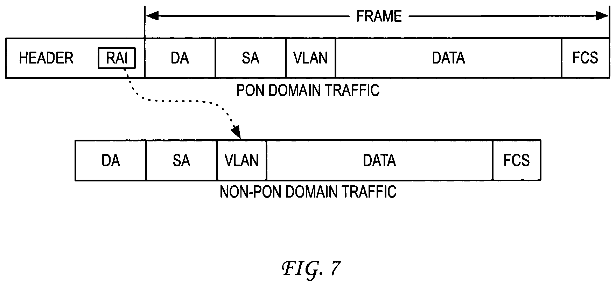

FIG. 7 illustrates one example embodiment of mapping a resource apportionment identifier at an intermediate adaptor node to facilitate communication over the mixed media access system. As illustrated, a frame structure used in a PON domain includes a header portion and a frame portion. In one example, the frame portion includes a destination MAC address (DA) field, a source MAC address (SA) field, a virtual local area network (VLAN) field, a data field, and a frame check sequence (FCS) field. For the PON domain traffic, the resource apportionment identifier is included within the header portion of the frame structure.

In mapping traffic between the PON domain and the non-PON domain, the header portion of the PON domain traffic is removed. As illustrated, the resource apportionment identifier that is needed for implementation of the end-to-end service is extracted from the header portion of the PON domain traffic, and inserted into the frame portion of the non-PON domain traffic. In the illustrated example, the resource apportionment identifier can be inserted into a 16-bit portion of the VLAN field of the Ethernet frame. As would be appreciated, the principles of the present invention are not limited to the insertion of the resource apportionment identifier into a VLAN field of the Ethernet frame. In other embodiments, the resource apportionment identifier can be inserted into another defined field of the Ethernet frame or at a defined offset position within the data portion of the Ethernet frame.

Regardless of the location within the Ethernet frame at which the resource apportionment identifier is inserted, its inclusion within the Ethernet frame enables the resource apportionment identifier to be communicated over the non-PON domain for receipt by the end network unit. At the receiving end network unit, the Ethernet frame can be parsed and the resource apportionment identifier extracted for use by the PON MAC and extended PON protocols at the end network unit.

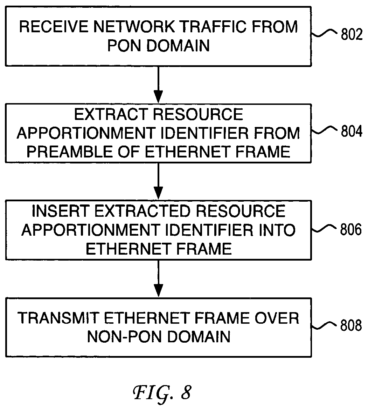

To further illustrate the mapping process of a resource apportionment identifier by an intermediate adaptor node, reference is now made to the flowchart of FIG. 8 which illustrates the process of the present invention. As illustrated, the process begins at step 802 where an intermediate adaptor node receives, via a PON PHY, network traffic from an OLT. At step 804, the medium-to-medium adaptor in the intermediate adaptor node extracts a resource apportionment identifier from a header portion of a frame structure contained in the received network traffic. As noted above, the resource apportionment identifier is assigned by the OLT to an end network station and is used to grant bandwidth to the end network station and to enable the end network station to report status back to the OLT.

Next, at step 806, the extracted resource apportionment identifier is inserted into an Ethernet frame in a defined field or at a defined offset location of the Ethernet frame. The particular field or location at which the resource apportionment identifier is inserted would be implementation dependent. Finally, at step 808, the Ethernet frame that contains the resource apportionment identifier is then transmitted, via a non-PON PHY of the intermediate adaptor node, to a downstream non-PON domain.

It is a feature of the present invention that the mapping of a resource apportionment identifier from a header portion to the frame portion itself enables the resource apportionment identifier to be carried over the non-PON domain for use by the end network unit. This enables the establishment of an end-to-end emulation of a point-to-point service that crosses multiple domains. In one embodiment, the non-PON PHY in the non-PON domain can be enhanced to recognize Ethernet frames with additional tags or fields that are used for the communication of a resource apportionment identifier.

The communication of the resource apportionment identifier over the non-PON domain enables a PON point-to-point multipoint protocol to be extended to provide management and control of a hybrid network having a PON domain and a non-PON domain. To illustrate the application of such management and control over a hybrid network, consider an example application to a hybrid network having an IEEE 802.11 non-PON domain.

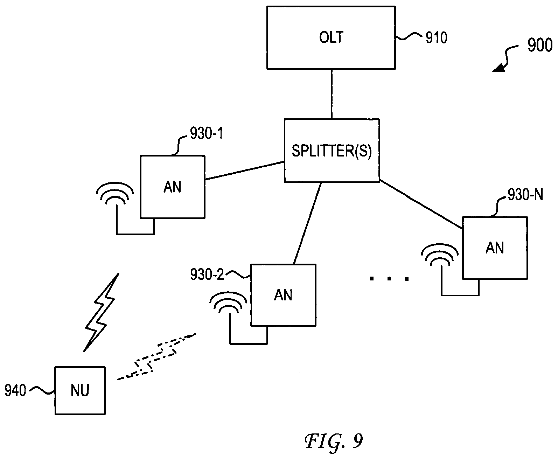

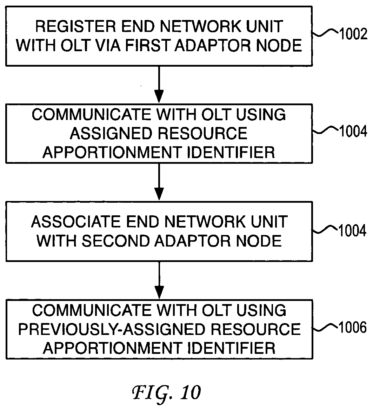

FIG. 9 illustrates an example of such a hybrid network. As illustrated, hybrid network 900 includes a single OLT 910 that communicates with a plurality of adaptor nodes 930-n via a PON. In this example, each intermediate adaptor node 930-n interfaces with an 802.11 non-PON domain that is supported by wireless network links. Each intermediate adaptor node 930-n would include an 802.11 non-PON PHY and a medium-to-medium adaptor that includes an 802.11 non-PON MAC that would enable communication with a wireless end network unit 940. Operation of such a hybrid network is now described with reference to FIG. 10, which illustrates a flowchart of a process of the present invention. In this example illustration, reference is made to EPON messaging. As would be appreciated, equivalent messaging can be used in the context of the ITU-T GPON framework.

When end network unit 940 enters into the range of adaptor node 930-1 in the hybrid network, end network unit 940 would first establish a WiFi connection with adaptor node 930-1 via communication with the 802.11 non-PON PHY and the 802.11 non-PON MAC in adaptor node 930-1. Once the WiFi connection is established between adaptor node 930-1 and end network unit 940, end network unit 940 can then register with OLT 910 via adaptor node 930-1 at step 1002. In this process, end network unit would respond to an autodiscovery process that is initiated by OLT 910 using a discovery GATE message. After end network unit 940 sets its local clock to the timestamp received in the discovery GATE message, end network unit 940 would then transmit a REGISTER_REQ message after waiting a random delay period following the start time of the initialization slot indicated by the discovery GATE message. The transmitted message would include the MAC address of end network unit 940 as well as the timestamp that represents the time that the REGISTER_REQ message was sent by end network unit 940. The timestamp enables OLT 910 to determine the round-trip time from OLT 910 to end network unit 940. Upon parsing and verifying the REGISTER_REQ message, OLT 910 would then issue a REGISTER message that contained the resource apportionment identifier that is assigned to end network unit 940.

After end network unit 940 has registered with OLT 910, end network unit 940 can then communicate with OLT 910 using the assigned resource apportionment identifier at step 1004. In this process, normal GATE and REPORT messages can be communicated between OLT 910 and end network unit 940 via adaptor node 930-1 using the resource apportionment identifier. This communication over the hybrid network that includes a PON domain and a non-PON domain is enabled by adaptor node 930-1, which facilitates the interface between the PON domain and non-PON domain in passing traffic between OLT 910 and end network unit 940. In one embodiment, OLT 910 would continue to monitor and adjust the round-trip time value for a connection to end network unit 940 via adaptor node 930-1 to ensure that synchronization through the PON domain is maintained as end network unit 940 moves within the range of adaptor node 930-1.

As end network unit 940 moves within the coverage area of hybrid network 900, end network unit can associate itself with a new wireless access point at step 1004. This process is illustrated in FIG. 9 as a change in communication by end network unit 940 with adaptor node 930-1 to communication by end network unit 940 with adaptor node 930-2. As noted above, adaptor node 930-2 interfaces with the PON domain via communication with OLT 910. As such, adaptor node 930-2 would also include an 802.11 non-PON PHY and a medium-to-medium adaptor that includes an 802.11 non-PON MAC that would enable communication with wireless end network unit 940.

The change in association of end network unit 940 from adaptor node 930-1 to adaptor node 930-2 would be facilitated by the 802.11 non-PON PHYs and 802.11 non-PON MACs contained in end network unit 940 and adaptor node 930-2. Significantly, the change in association of end network unit 940 from adaptor node 930-1 to adaptor node 930-2 would not require re-registration with OLT 910. Here, it is a feature of the present invention that the communication at step 1006 between end network unit 940 and OLT 910 would be facilitated using the same resource apportionment identifier that was obtained through the registration of end network unit 940 with OLT 910 via adaptor node 930-1. To facilitate the communication of end network unit 940 with OLT 910 via adaptor node 930-2, OLT 910 would again continue to monitor and adjust the round-trip time value for a connection to end network unit 940 via adaptor node 930-2 to ensure that synchronization through the PON domain is maintained as end network unit 940 moves within the range of adaptor node 930-2. Here, it should be noted that the use of the same resource apportionment identifier in communication with OLT via adaptor node 930-1 as well as adaptor node 930-2, enables end-to-end QoS to be controlled as end network unit 940 roams within the various coverage areas of the hybrid network.

As would be appreciated, the particular form of control over end-to-end services would be implementation dependent. What is significant is that such control over end-to-end services can be extended across various forms of hybrid networks.

In one embodiment, the extension of the multipoint control protocol can enable power management in promoting energy efficiency. For example, where non-PON domain network devices support low-power modes of operation, the management of the low-power modes of operation can be managed by the OLT using the resource apportionment identifier.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein.

## Claims

1. A network device, comprising:
a first physical layer device (222, 402) that is configured to receive first network traffic from an optical line terminal (110, 210, 610, 910) in a passive optical network, PON, domain at a first transmission rate via a fiber optic media;
a second physical layer device (224, 404) that is configured to transmit second network traffic to an end station (230, 630, 940) in a non-PON domain at a second transmission rate, wherein said second network traffic is based on said first network traffic; and
a medium-to-medium adaptor (221, 410) that is configured to extract a resource apportionment identifier from a header portion of a frame structure contained in said first network traffic and to include said resource apportionment identifier in an Ethernet frame contained in said second network traffic, wherein said resource apportionment identifier is assigned to said end station (230, 630, 940) by said optical line terminal (110, 210, 610, 910) and enables said end station (230, 630, 940) to report a status to said optical line terminal (110, 210, 610, 910) and to grant bandwidth by said optical line terminal (110, 210, 610, 910) to said end station (230, 630, 940).

2. The network device of claim 1, wherein said second physical layer device (224, 404) is configured to communicate with said end station (230, 630, 940) via a coaxial cable.

3. The network device of claim 1, wherein said second physical layer device (224, 404) is configured to communicate with said end station (230, 630, 940) via copper twisted pair.

4. The network device of claim 1, wherein said second physical layer device (224, 404) is configured to communicate with said end station (230, 630, 940) via wireless communication.

5. The network device of claim 1, wherein said first network traffic is a passive optical network, PON, domain traffic and said second network traffic is a non-PON domain traffic.

6. The network device of any preceding claim, wherein said resource apportionment identifier is a Logical Link Identifier, LLID.

7. The network device of any of claims 1 to 5, wherein said resource apportionment identifier is an Allocation Identifier, AllocID.

8. The network device of any preceding claim, wherein said resource apportionment identifier is inserted into a VLAN tag field in said Ethernet frame.

9. The network device of any preceding claim, wherein said first transmission rate is different from said second transmission rate.

10. The network device of claim 9, wherein said medium-to-medium adaptor (221, 410) is further configured to perform a rate conversion between said first transmission rate and said second transmission rate.

11. The network device of any preceding claim, wherein said medium-to-medium adaptor (221, 410) is further configured to decrypt data received from said optical line terminal (110, 210, 610, 910) via said fiber optic media and to encrypt data for transmission to said end station (230, 630, 940).

12. A network device (230) in a non-PON domain, comprising:
a physical layer device (232) that is configured to receive network traffic from a medium-to-medium adaptor (221, 410); and
a media access control module (234) that is configured to extract a resource apportionment identifier contained inside an Ethernet frame in said network traffic, wherein said resource apportionment identifier is assigned to said network device (230) by an optical line terminal (110, 210, 610, 910) in a PON domain that is coupled to said medium-to-medium adaptor (221, 410), said resource apportionment identifier enabling said network device (230) to report a status to said optical line terminal (110, 210, 610, 910) and to grant bandwidth by the optical line terminal (110, 210, 610, 910) to said network device (230).

13. The network device (230) of claim 12, wherein said physical layer device (232) is configured to communicate with said medium-to-medium adaptor (221, 410) via one of a coaxial cable, copper twisted pair, and wireless communication.

14. The network device (230) of claim 12 or 13, wherein said resource apportionment identifier is a Logical Link Identifier, LLID, or an Allocation Identifier, AllocID.

15. A method performed by a network device, comprising:
receiving (802), via a first physical layer device (222, 402) in the network device, first network traffic at a first transmission rate, said first physical layer device (222, 402) being coupled to an optical line terminal (110, 210, 610, 910) in a passive optical network, PON, domain via fiber optic media;
extracting (804) a resource apportionment identifier from a header portion of a frame structure contained in said first network traffic, said resource apportionment identifier being assigned to an end station (230, 630, 940) in a non-PON domain by said optical line terminal (110, 210, 610, 910) and enables said end station (230, 630, 940) to report a status to said optical line terminal (110, 210, 610, 910) and to grant bandwidth by said optical line terminal (110, 210, 610, 910) to said end station (230, 630, 940);
inserting (806) said extracted resource apportionment identifier into an Ethernet frame; and
transmitting (808), via a second physical layer device (224, 404) in the network device, second network traffic that includes said Ethernet frame to said end station (230, 630, 940) at a second transmission rate.

## Patentansprüche

1. Netzwerkvorrichtung, die aufweist:
eine erste Bitübertragungsschicht-Vorrichtung (222, 402), die dazu konfiguriert ist, ersten Netzwerkverkehr von einem Optical Line Terminal bzw. optischen Leitungsterminal (110, 210, 610, 910) in einer passiven optischen Netzwerk, PON, -Domäne mit einer ersten Senderate über ein Glasfasermedium zu empfangen;
eine zweite Bitübertragungsschicht-Vorrichtung (224, 404), die dazu konfiguriert ist, zweiten Netzwerkverkehr an eine Endstation (230, 630, 940) in einer Nicht-PON-Domäne mit einer zweiten Senderate zu senden, wobei der zweite Netzwerkverkehr auf dem ersten Netzwerkverkehr basiert; und
einen Medium-zu-Medium-Adapter (221, 410), der dazu konfiguriert ist, eine Ressourcenzuteilungskennung von einem Headerabschnitt einer Framestruktur, die in dem ersten Netzwerkverkehr enthalten ist, zu extrahieren und die Ressourcenzuteilungskennung in einen Ethernet-Frame einzufügen, der in dem zweiten Netzwerkverkehr enthalten ist, wobei die Ressourcenzuteilungskennung durch das Optical Line Terminal (110, 210, 610, 910) der Endstation (230, 630, 940) zugewiesen wird und die Endstation (230, 630, 940) dazu befähigt, einen Status an das Optical Line Terminal (110, 210, 610, 910) zu berichten und der Endstation (230, 630, 940) durch das Optical Line Terminal (110, 210, 610, 910) Bandbreite zu bewilligen.

2. Netzwerkvorrichtung nach Anspruch 1, wobei die zweite Bitübertragungsschicht-Vorrichtung (224, 404) dazu konfiguriert ist, mit der Endstation (230, 630, 940) über ein Koaxialkabel zu kommunizieren.

3. Netzwerkvorrichtung nach Anspruch 1, wobei die zweite Bitübertragungsschicht-Vorrichtung (224, 404) dazu konfiguriert ist, mit der Endstation (230, 630, 940) über ein verdrilltes Kupferpaar zu kommunizieren.

4. Netzwerkvorrichtung nach Anspruch 1, wobei die zweite Bitübertragungsschicht-Vorrichtung (224, 404) dazu konfiguriert ist, mit der Endstation (230, 630, 940) über drahtlose Kommunikation zu kommunizieren.

5. Netzwerkvorrichtung nach Anspruch 1, wobei der erste Netzwerkverkehr ein passiver optischer Netzwerk, PON, - Domänenverkehr ist und der zweite Netzwerkverkehr ein Nicht-PON-Domänenverkehr ist.

6. Netzwerkvorrichtung nach einem der vorhergehenden Ansprüche, wobei die Ressourcenzuteilungskennung ein Logical Link Identifier, LLID, ist.

7. Netzwerkvorrichtung nach einem der Ansprüche 1 bis 5, wobei die Ressourcenzuteilungskennung ein Allocation Identifier, AlloclD, ist.

8. Netzwerkvorrichtung nach einem der vorhergehenden Ansprüche, wobei die Ressourcenzuteilungskennung in ein VLAN-Tag-Feld in dem Ethernet-Frame eingefügt wird.

9. Netzwerkvorrichtung nach einem der vorhergehenden Ansprüche, wobei sich die erste Senderate von der zweiten Senderate unterscheidet.

10. Netzwerkvorrichtung nach Anspruch 9, wobei der Medium-zu-Medium-Adapter (221, 410) des Weiteren dazu konfiguriert ist, eine Ratenumwandlung zwischen der ersten Senderate und der zweiten Senderate durchzuführen.

11. Netzwerkvorrichtung nach einem der vorhergehenden Ansprüche, wobei der Medium-zu-Medium-Adapter (221, 410) des Weiteren dazu konfiguriert ist, Daten zu entschlüsseln, die von dem Optical Line Terminal (110, 210, 610, 910) über die Glasfasermedien empfangen werden, und Daten zur Übertragung an die Endstation (230, 630, 940) zu verschlüsseln.

12. Netzwerkvorrichtung (230) in einer Nicht-PON-Domäne, die aufweist:
eine Bitübertragungsschicht-Vorrichtung (232), die dazu konfiguriert ist, Netzwerkverkehr von einem Medium-zu-Medium-Adapter (221, 410) zu empfangen; und
ein Medienzugriffssteuerungs-Modul (234), das dazu konfiguriert ist, eine Ressourcenzuteilungskennung, die in einem Ethernet-Frame in dem Netzwerkverkehr enthalten ist, zu extrahieren, wobei die Ressourcenzuteilungskennung der Netzwerkvorrichtung (230) durch ein Optical Line Terminal (110, 210, 610, 910) in einer PON-Domäne zugewiesen wird, die mit dem Medium-zu-Medium-Adapter (221, 410) verbunden ist, wobei die Ressourcenzuteilungskennung die Netzwerkvorrichtung (230) dazu befähigt, einen Status an das Optical Line Terminal (110, 210, 610, 910) zu berichten und der Netzwerkvorrichtung (230) durch das Optical Line Terminal (110, 210, 610, 910) Bandbreite zu bewilligen.

13. Netzwerkvorrichtung (230) nach Anspruch 12, wobei die Bitübertragungsschicht-Vorrichtung (232) dazu konfiguriert ist, mit dem Medium-zu-Medium-Adapter (221, 410) über eines zu kommunizieren von einem Koaxialkabel, einem verdrillten Kupferpaar und drahtloser Kommunikation.

14. Netzwerkvorrichtung (230) nach Anspruch 12 oder 13, wobei die Ressourcenzuteilungskennung ein Logical Link Identifier, LLID, oder ein Allocation Identifier, AllocID, ist.

15. Verfahren, das von einer Netzwerkvorrichtung durchgeführt wird und aufweist:
Empfangen (802), über eine erste Bitübertragungsschicht-Vorrichtung (222, 402) in der Netzwerkvorrichtung, von erstem Netzwerkverkehr mit einer ersten Senderate, wobei die erste Bitübertragungsschicht-Vorrichtung (222, 402) mit einem Optical Line Terminal (110, 210, 610, 910) in einer passiven optischen Netzwerk, PON, -Domäne über Glasfasermedien verbunden ist;
Extrahieren (804) einer Ressourcenzuteilungskennung aus einem Headerabschnitt einer Framestruktur, die in dem ersten Netzwerkverkehr enthalten ist, wobei die Ressourcenzuteilungskennung, einer Endstation (230, 630, 940) in einer Nicht-PON-Domäne durch das Optical Line Terminal (110, 210, 610, 910) zugewiesen wird und die Endstation (230, 630, 940) dazu befähigt, einen Status an das Optical Line Terminal (110, 210, 610, 910) zu berichten und der Endstation (230, 630, 940) durch das Optical Line Terminal (110, 210, 610, 910) Bandbreite zu bewilligen;
Einfügen (806) der extrahierten Ressourcenzuteilungskennung in einen Ethernet-Frame; und
Senden (808), über eine zweite Bitübertragungsschicht-Vorrichtung (224, 404) in der Netzwerkvorrichtung, von zweitem Netzwerkverkehr, der den Ethernet-Frame enthält, an die Endstation (230, 630, 940) mit einer zweiten Senderate.

## Revendications

1. Dispositif de réseau, comprenant :
un premier dispositif de couche physique (222, 402) qui est conçu pour recevoir un premier trafic de réseau depuis un terminal de ligne optique (110, 210, 610, 910) dans un domaine de réseau optique passif, PON, à un premier débit de transmission via un support à fibre optique ;
un second dispositif de couche physique (224, 404) qui est conçu pour transmettre un second trafic de réseau à une station terminale (230, 630, 940) dans un domaine non PON, à un second débit de transmission, dans lequel ledit second trafic de réseau est basé sur ledit premier trafic de réseau ; et
un adaptateur de support à support (221, 410) qui est conçu pour extraire un identifiant de répartition de ressources d'une partie en-tête d'une structure de trame contenue dans ledit premier trafic de réseau et pour inclure ledit identifiant de répartition de ressources dans une trame Ethernet contenue dans ledit second trafic de réseau, dans lequel ledit identifiant de répartition de ressources est attribué à ladite station terminale (230, 630, 940) par ledit terminal de ligne optique (110, 210, 610, 910) et permet à ladite station terminale (230, 630, 940) de signaler un état audit terminal de ligne optique (110, 210, 610, 910) et d'accorder une bande passante par ledit terminal de ligne optique (110, 210, 610, 910) à ladite station terminale (230, 630, 940).

2. Dispositif de réseau selon la revendication 1, dans lequel ledit second dispositif de couche physique (224, 404) est conçu pour communiquer avec ladite station terminale (230, 630, 940) via un câble coaxial.

3. Dispositif de réseau selon la revendication 1, dans lequel ledit second dispositif de couche physique (224, 404) est conçu pour communiquer avec ladite station terminale (230, 630, 940) via une paire torsadée en cuivre.

4. Dispositif de réseau selon la revendication 1, dans lequel ledit second dispositif de couche physique (224, 404) est conçu pour communiquer avec ladite station terminale (230, 630, 940) via une communication sans fil.

5. Dispositif de réseau selon la revendication 1, dans lequel ledit premier trafic de réseau est un trafic de domaine de réseau optique passif, PON, et ledit second trafic de réseau est un trafic de domaine non PON.

6. Dispositif de réseau selon l'une quelconque des revendications précédentes, dans lequel ledit identifiant de répartition de ressources est un identifiant de lien logique, LLID.

7. Dispositif de réseau selon l'une quelconque des revendications 1 à 5, dans lequel ledit identifiant de répartition de ressources est un identifiant d'allocation, AllocID.

8. Dispositif de réseau selon l'une quelconque des revendications précédentes, dans lequel ledit identifiant de répartition de ressources est inséré dans un champ d'étiquette VLAN dans ladite trame Ethernet.

9. Dispositif de réseau selon l'une quelconque des revendications précédentes, dans lequel ledit premier débit de transmission est différent dudit second débit de transmission.

10. Dispositif de réseau selon la revendication 9, dans lequel ledit adaptateur de support à support (221, 410) est en outre conçu pour effectuer une conversion de débit entre ledit premier débit de transmission et ledit second débit de transmission.

11. Dispositif de réseau selon l'une quelconque des revendications précédentes, dans lequel ledit adaptateur de support à support (221, 410) est en outre conçu pour décrypter les données reçues dudit terminal de ligne optique (110, 210, 610, 910) via ledit support à fibre optique et pour chiffrer les données à transmettre à ladite station terminale (230, 630, 940).

12. Dispositif de réseau (230) dans un domaine non PON, comprenant :
un dispositif de couche physique (232) qui est conçu pour recevoir un trafic de réseau à partir d'un adaptateur de support à support (221, 410) ; et
un module de contrôle d'accès au support (234) qui est conçu pour extraire un identifiant de répartition de ressources contenu à l'intérieur d'une trame Ethernet dans ledit trafic de réseau, dans lequel ledit identifiant de répartition de ressources est attribué audit dispositif de réseau (230) par un terminal de ligne optique (110, 210, 610, 910) dans un domaine PON qui est couplé audit adaptateur de support à support (221, 410), ledit identifiant de répartition de ressources permettant audit dispositif de réseau (230) de signaler un état audit terminal de ligne optique (110, 210, 610, 910) et d'accorder une bande passante par le terminal de ligne optique (110, 210, 610, 910) audit dispositif de réseau (230).

13. Dispositif de réseau (230) selon la revendication 12, dans lequel ledit dispositif de couche physique (232) est conçu pour communiquer avec ledit adaptateur de support à support (221, 410) via l'un parmi un câble coaxial, une paire torsadée en cuivre et une communication sans fil.

14. Dispositif de réseau (230) selon la revendication 12 ou 13, dans lequel ledit identifiant de répartition de ressources est un identifiant de lien logique, LLID, ou un identifiant d'allocation, AllocID.

15. Procédé exécuté par un dispositif de réseau, comprenant :
la réception (802), via un premier dispositif de couche physique (222, 402) dans le dispositif de réseau, d'un premier trafic de réseau à un premier débit de transmission, ledit premier dispositif de couche physique (222, 402) étant couplé à un terminal de ligne optique (110, 210, 610, 910) dans un domaine de réseau optique passif, PON, via un support à fibre optique ;
l'extraction (804) d'un identifiant de répartition de ressources d'une partie en-tête d'une structure de trame contenue dans ledit premier trafic de réseau, ledit identifiant de répartition de ressources étant attribué à une station terminale (230, 630, 940) dans un domaine non PON par ledit terminal de ligne optique (110, 210, 610, 910) et permet à ladite station terminale (230, 630, 940) de signaler un état audit terminal de ligne optique (110, 210, 610, 910) et d'accorder une bande passante par ledit terminal de ligne optique (110, 210, 610, 910) à ladite station terminale (230, 630, 940) ;
l'insertion (806) dudit identifiant de répartition de ressources extrait dans une trame Ethernet ; et
la transmission (808), via un second dispositif de couche physique (224, 404) dans le dispositif de réseau, d'un second trafic de réseau qui comprend ladite trame Ethernet à ladite station terminale (230, 630, 940) à un second débit de transmission.
